Europäisches Patentamt

European Patent Office

Office européen des brevets

(19)

(11) Numéro de publication: **0 060 781**
**B1**

(12) # FASCICULE DE BREVET EUROPEEN

(45) Date de publication du fascicule du brevet:
**31.07.85**

(51) Int. Cl.⁴: **B 60 S 1/28,** B 60 S 1/34

(21) Numéro de dépôt: **82400440.2**

(22) Date de dépôt: **11.03.82**

(54) Essuie-glace double notamment pour véhicule.

(30) Priorité: **17.03.81 FR 8105348**

(43) Date de publication de la demande:
**22.09.82 Bulletin 82/38**

(45) Mention de la délivrance du brevet:
**31.07.85 Bulletin 85/31**

(84) Etats contractants désignés:
**AT BE CH DE GB IT LI LU NL SE**

(56) Documents cités:
**FR - A - 2 452 403**
**GB - A - 958 121**

(73) Titulaire: **Morette, Jacques, "Les Cottages",
F-76380 Montigny (FR)**

(72) Inventeur: **Morette, Jacques, "Les Cottages",
F-76380 Montigny (FR)**

(74) Mandataire: **Derambure, Christian, Cabinet BUGNION
ASSOCIES SARL 116, boulevard Haussmann,
F-75008 Paris (FR)**

BUNDESDRUCKEREI BERLIN

## Description

La présente invention concerne un essuie-glace double, notamment pour un pare-brise de véhicule.

Dans le brevet GB-A-958 121, on a décrit un essuie-glace double comportant deux bras sensiblement parallèles et proches l'un de l'autre, chaque bras sensiblement rectiligne portant à son extrémité libre un balai sensiblement parallèle au balai de l'autre bras et appliqué, lors du fonctionnement de l'essuie-glace, sur le pare-brise, l'extrémité opposée de chaque bras étant articulée sur une tête de fixation montée, lors du fonctionnement, sur un axe de rotation commun aux deux bras, l'axe de rotation étant sensiblement perpendiculaire à une zone centrale du pare-brise et pouvant être animé d'un mouvement alternatif de rotation dans un secteur correspondant à un secteur prédéterminé à balayer sur la surface du pare-brise. La tête de fixation comporte à l'extrémité de chaque bras, un axe d'articulation sensiblement perpendiculaire à l'axe de rotation alternative. L'essuie-glace compte en outre des moyens élastiques d'appui dont la fonction est d'appliquer chaque balai contre la surface du pare-brise.

Cependant, la variation de la cambrure du pare-brise dans le secteur balayé par l'essuie-glace rend difficile une application exacte et constante de la lame souple de chaque balai contre la surface à nettoyer, notamment pour un véhicule rapide, en cas de pluie très abondante ou de projection d'eau ou boue par un autre véhicule.

Le but de l'invention est de remédier aux inconvénients et difficultés mentionnés ci-dessus, pour réaliser un essuie-glace double dont les balais restent constamment appliqués sur la surface du pare-brise.

Selon l'invention, l'essuie-glace double mentionné plus haut est caractérisé en ce que l'axe d'articulation est unique et commun aux deux extrémités centrales et en ce que l'extrémité centrale de chaque bras et la tête de fixation présentent des faces latérales d'appui, transversales à l'axe d'articulation, aménagées de manière à coopérer respectivement entre elles, de manière à permettre à chaque bras de pivoter légèrement autour de l'axe d'articulation tout en restant dans un même plan transversal audit axe, afin de permettre au balai associé à chaque bras de suivre exactement le profil plus ou moins cambré du pare-brise en tout endroit de celui-ci où le balai associé à chacun d'eux est appliqué.

D'autres particularités et avantages de l'invention ressortiront encore des revendications 2 à 9. La description de quelques modes de réalisation, présentés à titre d'exemples non limitatifs, en référence aux dessins annexés, permettra de comprendre comment l'invention peut être mise en pratique.

La figure 1 est une vue latérale schématique et partielle d'un essuie-glace double conforme à l'invention, dont les extrémités libres des bras sont représentés sur la figure 4,

la figure 2 est une vue en plan par dessus suivant II-II de la figure 1, les extrémités libres des bras étant représentées sur la figure 5,

la figure 3 est une coupe schématique agrandie suivant III-III de la figure 1,

la figure 4 est une vue latérale schématique des extrémités libres des bras de l'essuie-glace de la figure 1, dans le prolongement de cette figure et montrant la possibilité de débattement des bras l'un par rapport à l'autre, organisée pour leur position relative moyenne,

la figure 5 est une vue en plan par dessus des extrémités libres des bras suivant V-V de la figure 4,

la figure 6 est une vue en plan par dessous de l'essuie-glace double suivant VI-VI de la figure 1,

la figure 7, analogue à la figure 6, est une vue en plan par dessous d'une variante de l'essuie-glace double conforme à l'invention.

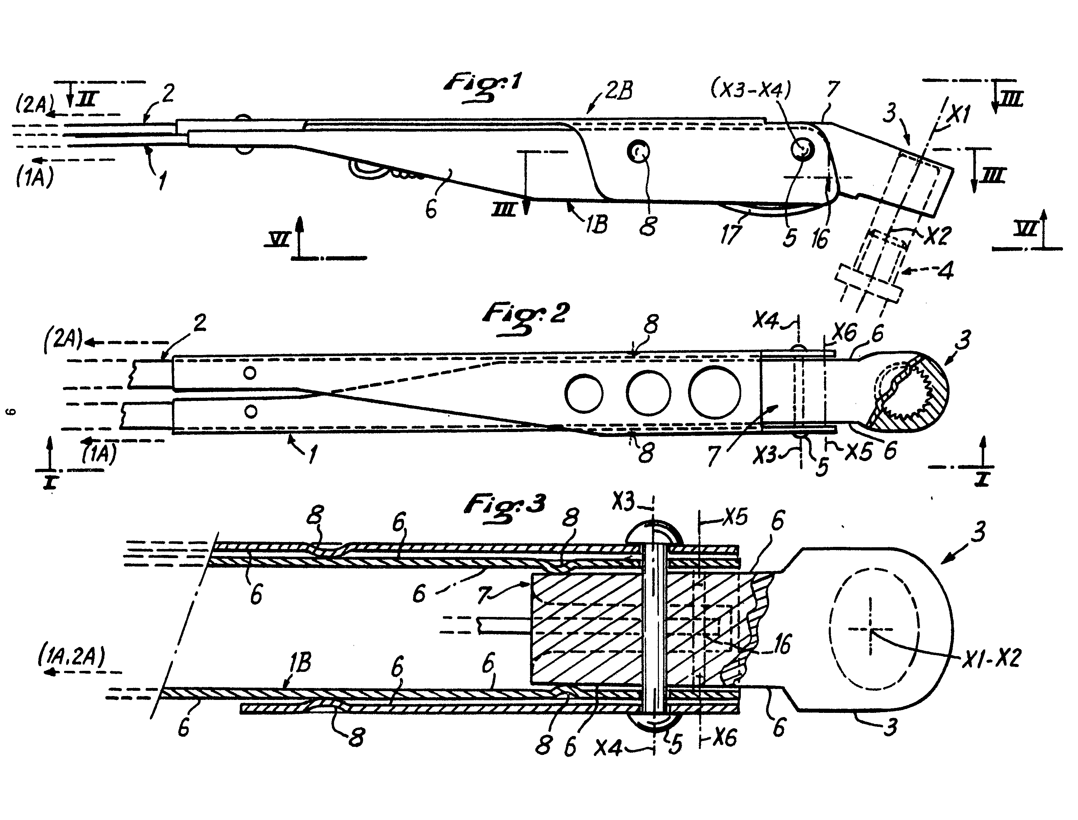

Dans le mode de réalisation des figures 1 à 6, l'essuie-glace double, prévu pour être monté en regard d'un pare-brise de véhicule automobile (non représenté), comporte deux bras 1, 2, sensiblement parallèles et proches l'un de l'autre, d'une longueur de 40 à 50 cm, par exemple. Chaque bras sensiblement rectiligne a une extrémité libre 1A, 2A, respectivement légèrement décalées l'une par rapport à l'autre. Chaque extrémité libre porte un balai (non représenté) sensiblement parallèle au bras correspondant 1, 2 et appliqué en position de service sur le pare-brise. L'autre extrémité centrale 1B, 2B, de chaque bras 1, 2 est articulé sur une tête de fixation 3, montée en position de service suivant un axe de rotation X1, X2, sur un pivot 4 schématisé en traits interrompus sur la figure 1. Le pivot 4, commun aux deux bras 1, 2, est fixé à demeure sur le véhicule, par exemple au voisinage de la bordure inférieure du pare-brise, et orienté dans une direction sensiblement perpendiculaire à la zone concernée du pare-brise. D'une manière connue, le pivot 4 peut être animé d'un mouvement alternatif de rotation dans un secteur angulaire qui correspond à un secteur prédéterminé, aussi large que possible, à balayer à la surface du pare-brise. Pour l'extrémité centrale 1B, 2B, de chaque bras 1, 2, la tête de fixation 3 comporte un axe d'articulation, décrit plus loin, sensiblement perpendiculaire à l'axe de rotation alternative X1, X2, et des moyens élastiques d'appui, constitués par exemple par des ressorts pour appliquer contre la surface du pare-brise chacun des balais fixés aux extrémités libres 1A, 1B des bras 1, 2.

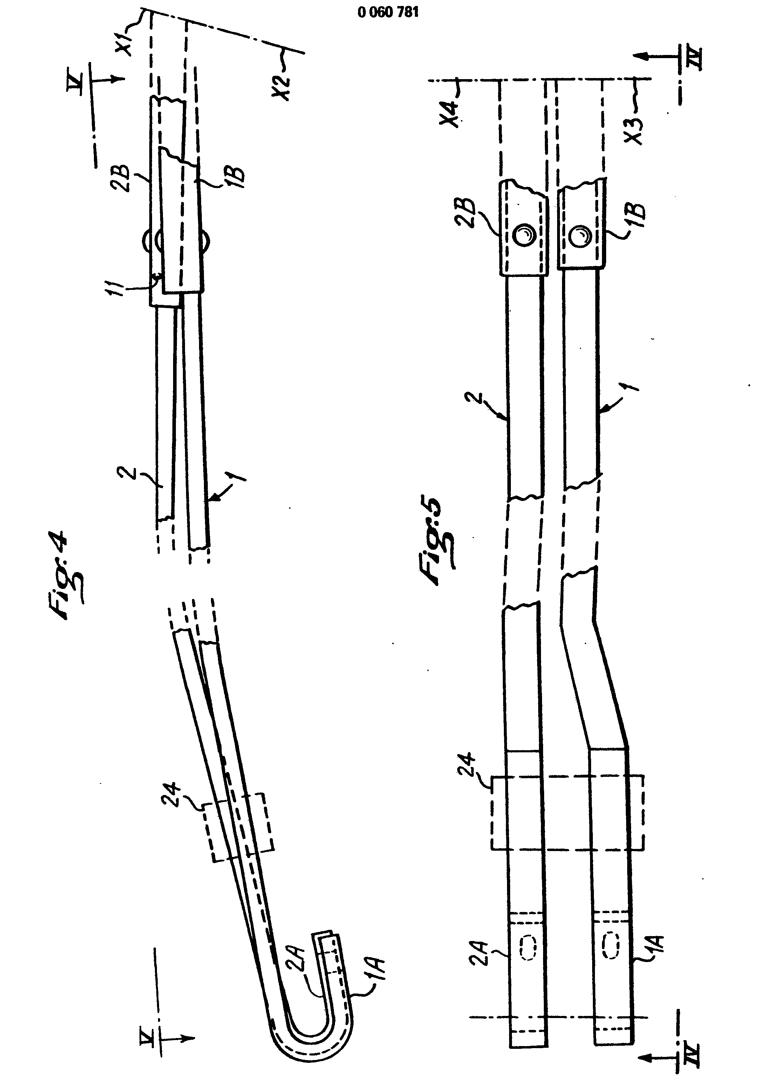

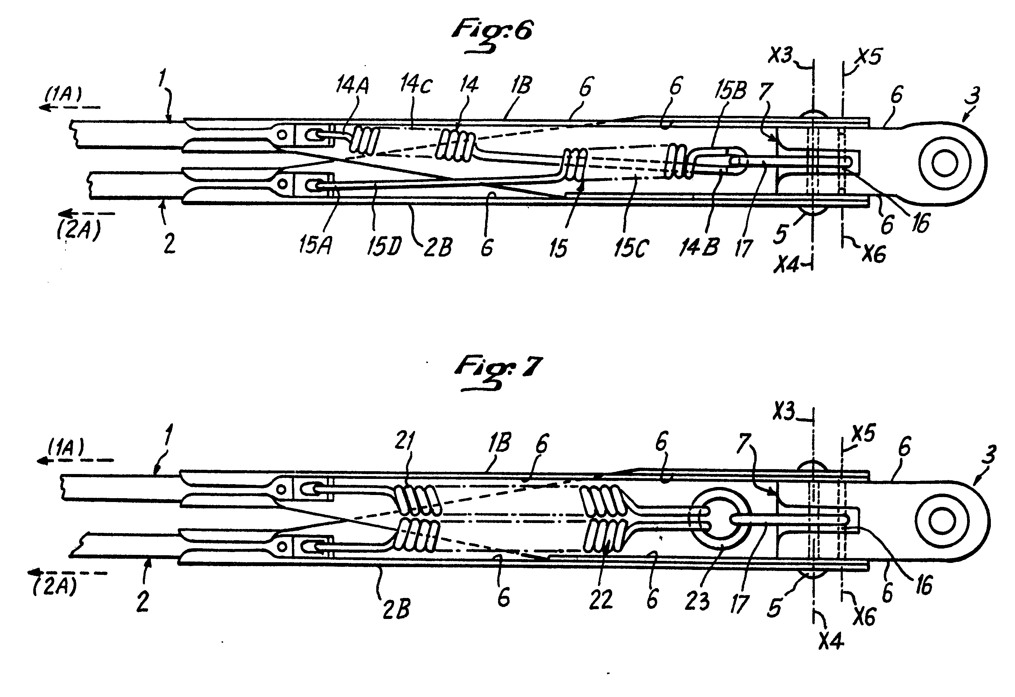

Selon d'invention, l'extrémité centrale 1B, 2B de chaque bras 1, 2 est associée à la tête de fixation 3 par un axe d'articulation unique X3, X4 commun aux deux extrémités centrales 1B, 2B (figures 2 et 3). L'axe d'articulation X3, X4 est matérialisé par exemple par un rivet 5. En outre, l'extrémité centrale 1B, 2B, de chaque bras 1, 2, présente des faces latérales d'appui 6, transversales à l'articulation X3, X4 et voisines de celui-ci. Chacune des faces latérales d'appui 6 de chaque extrémité centrale 1B, 2B, coopère avec la face latérale d'appui correspondante 6 de la tête de fixation 3, ou de l'extrémité centrale 2B, 1B, de l'autre bras 2, 1, pour obliger chaque bras 1, 2 à rester dans un plan prédéterminé, transversal à l'axe d'articulation X3, X4, tout en se déplaçant à la demande dans le plan précité, en pivotant légèrement sur l'axe de circulation X3, X4, pour permettre au balai associé à chaque bras 1, 2 de suivre exactement le profil plus ou moins cambré du pare-brise en tout endroit du secteur balayé sur celui-ci.

Dans le mode de réalisation représenté sur les figures 1 à 3, l'extrémité centrale 1B de l'un des bras 1, dit inférieur, présente une forme profilée sensiblement en U, emboîtée sur une partie parallélépipédique 7 de profil correspondant de la tête de fixation 3. L'extrémité centrale 2B de l'autre bras 2, dit supérieur, présente une forme analogue, également profilée en U, mais de calibre légèrement supérieur au calibre de l'extrémité centrale 1B du bras inférieur 1, pour s'emboîter sur cette extrémité 1B.

Les ailes des extrémités centrales 1B, 2B, profilées en U, sont superposées de chaque côté de la tête de fixation 3, en regard d'une face latérale correspondante 6 de la partie parallélépipédique 7 de la tête de fixation. La partie parallélépipédique 7 est traversée, ainsi que les ailes des extrémités centrales 1B, 2B, par l'axe d'articulation X3—X4 commun aux deux extrémités centrales 1B, 2B et matérialisé par le rivet 5.

Pour faciliter le pivotement libre et indépendant de chaque extrémité centrale 1B, 2B, sur l'axe d'articulation X3—X4, des moyens de glissement sont prévus sur les faces latérales d'appui 6, associées deux à deux, de la partie parallélépipédique 7 de la tête de fixation, et des deux extrémités centrales 1B, 2B. Dans le mode de réalisation représenté ici à titre d'exemple sur les figures 1 à 3, chaque face latérale d'appui 6 de l'extrémité centrale supérieure 2B, dispose en regard d'une face latérale d'appui 6 correspondante de l'extrémité centrale inférieure 1B, comporte ainsi un bossage en saillie 8, prévu pour glisser facilement sur la face latérale en question de l'extrémité 1B. De même, chaque face latérale d'appui 6 de l'extrémité centrale inférieure 1B comporte un autre bossage en saillie 8, prévu pour glisser facilement sur la face latérale correspondante 6 de la partie parallélépipédique 7.

En position de service de l'essuie-glace sur le pare-brise, les extrémités centrales 1B, 2B sont montées avec un débattement angulaire suffisant sur l'axe d'articulation X3—X4, l'une par rapport à l'autre, et par rapport à la tête de fixation 3 (figures 1 à 3), pour que les balais (non représentés) portés par les extrémités libres 1A, 1B, des deux bras 1, 2 (figures 4 et 5) soient chacun correctement en appui contre la surface du pare-brise en tout endroit du secteur balayé sur celui-ci, ce qui suppose que, en aucun cas, les branches supérieures, c'est-à-dire médianes, der profilés en U constituant les extrémités centrales 1B, 2B des bras, ne puissent venir en protée l'une contre l'autre.

Pratiquement, ce débattement angulaire des deux bras 1, 2 est assuré par une configuration appropriée et vérifiée expérimentalement, des deux extrémités centrales 1B, 2B, profilées en U, solidaires des extrémités libres 1A, 2A. Dans ce but, on tient compte de la position de l'axe d'articulation X3—X4 commun aux deux extrémités centrales 1B, 2B et d'une légère différence de cambrure prévue à cet effet sur les deux bras 1, 2, au voisinage de leurs extrémités libres 1A, 2A. Ainsi qu'on l'a schématisé sur la figure 4, le bras supérieur 2 est légèrement plus cambré que le bras inférieur 1, pour donner à l'extrémité centrale supérieure 2B, une inclinaison légèrement supérieure à celle de l'extrémité centrale inférieure 1B en position d'inclinaison moyenne des deux extrémités libres 1A, 2A, schématisée sur la figure 4, où l'on a également indiqué l'orientation de l'axe de rotation X1—X2 de l'essuie-glace, par rapport auquel on mesure l'inclinaison précitée de chacun des bras 1, 2. On a également schématisé sur la figure 4 la position moyenne relative des deux extrémités centrales 1B, 2B des bras de l'essuie-glace double et la plage de débattement 11 permise en inclinaison autour de cette position moyenne relative.

De préférence, les moyens d'appui prévus pour appliquer contre la surface du pare-brise le balai (non représenté) monté à l'extrémité libre 1A, 2A de chaque bras 1, 2 (figures 1 à 3), comportent pour chaque bras 1, 2 un ressort hélicoïdal 14, 15, travaillant en tension (figure 6). Une extrémité 14A, 15A, de chaque ressort est reliéeau bras correspondant 1, 2, en un point assez éloigné suivant la longueur du ressort et situé du côté de l'extrémité libre 1A, 2A de chaque bras 1, 2. L'autre extrémité 14B, 15B, de chaque ressort est reliée à la tête de fixation 3 en un point 16 de celle-ci proche de l'axe d'articulation X3—X4 des deux extrémités centrales 1B, 2B, et situé entre l'axe X3—X4 et le prolongement (non représenté) de la surface du pare-brise.

Les deux ressorts hélicoïdaux 14, 15, sont sensiblement identiques et logés dans la partie interne du profil en U de l'extrémité centrale 1B du bras inférieur 1. Les deux ressorts 14, 15 sont reliés à la tête de fixation 3 par un crochet d'ancrage commun 17, engagé sur une broche d'axe X5—X6 traversant à l'endroit du point 16 la partie parallélépipédique 7 de la tête de fixation 3 (figures 1 et 6).

Chaque ressort hélicoïdal 14, 15, comporte une partie hélicoïdale 14C, 15C prolongée par une branche rectiligne de liaison 14D, 15D, de longueur sensiblement supérieure à la longueur de la partie hélicoïdale 14C, 15C. Pour réduire de manière avantageuse l'encombrement transversal des deux extrémités centrales 1B, 2B et de la tête de fixation 3, les deux ressorts 14, 15 sont montés tête-bêche dans le profil en U de l'extrémité centrale inférieure. La partie hélicoïdale telle que 15C de l'un des ressorts se trouve disposée du côté de la tête de fixation 3 et traversée dans le sens axial par la branche rectiligne de liaison 14D de l'autre ressort. Les dimensions des ressorts 14, 15 et leur montage sont étudiés pour que la branche rectiligne de liaison 14D puisse ainsi passer sans contact mutuel indésirable entre les spires de la partie hélicoïdale 15C de l'autre ressort 15, et également pour éviter le contact de l'un ou l'autre des ressorts 14, 15 sur la face interne de l'extrémité centrale inférieure 1B. On garantit ainsi la douceur et l'indépendance du mouvement de pivotement de chaque bras 1, 2, par rapport à l'axe commun d'articulation X3—X4 et on évite toute usure par frottement des ressorts 14, 15, au profit de leur endurance prolongée.

Comme on l'a vu, l'essuie-glace double conforme à l'invention présente plusieurs avantages, pour sa réalisation économique, son fonctionnement efficace et son endurance prolongée.

Grâce à l'effet combiné de l'axe commun d'articulation X3—X4, matérialisé par exemple par le rivet 5 et des faces latérales d'appui 6 de chaque extrémité centrale 1B, 2B et de la tête de fixation 3, on assure de manière commode, avec le minimum d'encombrement et avec des pièces simples à réaliser, le libre pivotement de chaque bras 1, 2, obligé cependant de rester constamment dans un même plan transversal à l'axe d'articulation X3—X4.

Ces avantages sont obtenus d'une manière simple et commode dans le mode préféré de réalisation industrielle de l'invention, où l'extrémité centrale 1B, 2B de chacun des bras présente une forme profilée sensiblement en U, les deux extrémités centrales étant emboîtées l'une sur l'autre et l'extrémité centrale inférieure 1B étant emboîtée sur la partie parallélépipédique 7 de la tête de fixation 3; ces trois parties étant associées par l'axe d'articulation commun X3—X4, matérialisé par le rivet 5.

Grâce aux moyens de glissement constitués par exemple par le bossage en saillie 8 réalisé sur les ailes de chaque extrémité centrale 1B, 2B, le mouvement de pivotement indépendant de chaque bras 1, 2 est particulièrement doux, ce qui permet d'utiliser des ressorts d'appui 14, 15 (figure 6) de puissance et d'encombrement relativement modérés, sans risque d'un effort d'appui subitement excessif à l'endroit des balais.

Grâce à la plage 11 de libre débattement assurée à chaque bras 1, 2, en pivotement par rapport à l'axe d'articulation X3—X4 (figure 4) au moyen d'une configuration appropriée des deux extrémités centrales 1B, 2B et d'une cambrure appropriée des deux bras au voisinage de leurs extrémités libres 1A, 2A, on grantit une application correcte des balais de l'essuie-glace montés aux extrémités libres 1A, 2A des bras, sur toute l'étendue du secteur balayé par le pare-brise, même dans les zones latérales où le pare-brise peut présenter une cambrure nettement plus prononcée.

Le montage tête-bêche des deux ressorts d'appui 14, 15 (figure 6) permet de limiter d'une manière avantageuse l'encombrement transversal des deux extrémités centrales 1B, 2B, et de la tête de fixation 3 de l'essuie-glace. En outre, le passage de la branche rectiligne de liaison 14D de l'un des ressorts dans les spires du corps hélicoïdal 15C de l'autre ressort évite tout effet d'usure des deux ressorts par frottement mutuel, ou contre la face interne de l'extrémité centrale inférieure 1B, au profit de la douceur de pivotement des deux bras 1, 2 et de l'endurance prolongée des ressorts et de l'ensemble de l'essuie-glace.

Les extrémités 14B, 15B des ressorts sont reliées à la tête de fixation 3 en un point 16 de celle-ci proche de l'axe d'articulation X3—X4 des deux extrémités centrales et situé entre cet axe et la surface du pare-brise.

On a représenté sur la figure 7, une variante de réalisation de l'essuie-glace comportant deux ressorts d'appui 21, 22, jouant sensiblement le même rôle que les deux ressorts d'appui 14, 15, de la figure 6, mais montés côte à côte et de manière sensiblement parallèle dans la partie interne de l'extrémité centrale inférieure 1B profilée en U. Pour faciliter ce montage, les deux extrémités des ressorts 21, 22, disposées du côté de la tête de fixation sont accouplées par un anneau commun 23 et reliées par l'intermédiaire de cet anneau au crochet d'ancrage 17 déjà décrit à propos de la figure 6.

Au besoin, pour associer l'une à l'autre avec une certaine liberté les extrémités libres 1A, 1B, des deux bras 1, 2 (figures 4, 5), on peut prévoir entre ces deux extrémités un lien souple 24, par exemple en matière plastique moulée, afin de conjuguer assez étroitement les mouvements alternatifs de balayage des deux bras 1, 2 à la surface du pare-brise notamment lorsqu'ils sont de grande longueur. On empêche ainsi les deux extrémités 2A, 1B de s'écarter ou de se rapprocher exagérément, sous l'effet de la flexibilité transversale des bras 1 et 2 et des irrégularités des efforts de frottement des balais (non représentés) à la surface du pare-brise. Bien entendu, le montage du lien souple 24 est réalisé de manière à ne pas compromettre le libre débattement indépendant des deux bras 1, 2 en pivotement par rapport à l'axe d'articulation X3—X4 (figures 1 et 2) avec l'amplitude voulue pour les plages de débattement 11 et 12 (figure 4).

Mais il est évident que l'essuie-glace double conforme à l'invention convient aussi bien pour être monté dans une position axiale du pare-brise permettant de balayer celui-ci avec un seul système de deux bras rapprochés 1, 2, montés sur un pivot 4 unique pour le pare-brise considéré (figure 1), que pour d'autres applications, par exemple pour des pare-brises de grandes dimensions ou de forme particulièrement complexe, munis chacun d'au moins deux systèmes de deux bras rapprochés, chaque paire de bras étant montée sur un pivot particulier.

Enfin, l'essuie-glace conforme à l'invention convient également pour les pare-brises de divers engins, en dehors des véhicules automobiles, tels que des pare-brises d'avions, d'hélicoptères ou de navires ou embarcations de diverses tailles.

**Revendications**

1. Essuie-glace double, notamment pour un pare-brise de véhicule comportant deux bras (1, 2) sensiblement parallèles et proches l'un de l'autre dans lequel chaque bras sensiblement rectiligne présente une extrémité dite libre (1A, 2A) qui porte un balai sensiblement parallèle au balai de l'autre bras et appliqué en position de service sur le pare-brise, l'autre extrémité (1B, 2B), dite centrale, de chaque bras étant articulée sur une tête de fixation (3) montée en position de service sur un axe de rotation (X1—X2) commun aux deux bras, sensiblement perpendiculaire à une zone centrale du pare-brise et pouvant être animé d'un mouvement alternatif de rotation dans un secteur qui correspond à un secteur prédéterminé à balayer sur la surface du pare-brise tandis que la tête de fixation (3) comporte à l'extrémité centrale de chaque bras un axe d'articulation (X3—X4) sensiblement perpendiculaire à son axe de rotation alternative, et des moyens élastiques (14, 15) d'appui, pour appliquer individuellement chaque balai contre la surface du pare-brise, caractérisé en ce que l'axe d'articulation (X3—X4) est unique et commun aux deux extrémités centrales et en ce que l'extrémité centrale de chaque bras et la tête de fixation (3) présentent des faces latérales d'appui (6), transversales à l'axe d'articulation (X3—X4), aménagées de manière à coopérer respectivement entre elles de manière à permettre à chaque bras de pivoter légèrement autour de l'axe commun d'articulation (X3—X4) tout en restant dans un même plan transversal audit axe, afin de permettre au balai associé à chaque bras de suivre exactement le profil plus ou moins cambré du pare-brise, en tout endroit du secteur balayé sur celui-ci.

2. Essuie-glace conforme à la revendication 1, caractérisé en ce que l'extrémité centrale de l'un des bras dit inférieur (1B) présente une forme profilée sensiblement en U, emboîtée sur une partie sensiblement parallélépipédique (7) de la tête de fixation (3), l'extrémité centrale de l'autre bras dit supérieur (2B) présentant une forme analogue profilée en U, mais de calibre légèrement supérieur au calibre de l'extrémité centrale du bras inférieur de manière à venir s'emboîter sur cette extrémité, les faces latérales en regard formant les ailes (6) des deux extrémités centrales profilées en U, étant ainsi superposées, de chaque côté de la tête de fixation (3) et en ce que ladite partie parallélépipédique est traversée, ainsi que les ailes des extrémités centrales profilées en U par l'axe d'articulation (X3—X4, 5) commun aux deux extrémités centrales (1B, 2B).

3. Essuie-glace conforme à l'une des revendications 1 ou 2, caractérisé en ce que les faces latérales d'appui (6) associées deux à deux, des deux extrémités centrales (1B, 2B) et/ou de la tête de fixation (3) comportent des moyens de glissement (8) pour faciliter le pivotement libre et indépendant de l'extrémité centrale de chaque bras par rapport à l'autre bras.

4. Essuie-glace conforme à la revendication 3, caractérisé en ce que les moyens de glissement sont constitués par au moins un bossage en saillie (8).

5. Essuie-glace conforme à l'une des revendications 1 à 4, caractérisé en ce que les extrémités centrales (1B, 2B) des deux bras sont montées avec une possibilité de débattement angulaire suffisante autour de leur axe commun d'articulation (X3—X4) l'une par rapport à l'autre et/ou par rapport à la tête de fixation (3) de manière que, en aucun cas les extrémités centrales (1B, 2B) des bras, ne puissent venir en portée l'une contre l'autre.

6. Essuie-glace conforme à l'une des revendications 1 à 5, caractérisé en ce que les moyens élastiques d'appui comportent pour chaque bras un ressort hélicoïdal (14, 15, 21, 22) travaillant en tension, chaque ressort ayant une extrémité (14A, 15A) reliée au bras correspondant en un point situé du côté de l'extrémité libre (1A, 2A) de ce bras, et l'autre extrémité (14B, 15B) reliée à la tête de fixation (3), en un point (16) de celle-ci proche de l'axe d'articulation (X3—X4) des deux extrémités centrales et situé entre cet axe et la surface du pare-brise.

7. Essuie-glace conforme à la revendication 6, caractérisé en ce que les deux ressorts hélicoïdaux (14, 15, 21, 22) sont logés dans la partie interne du profil en U de l'extrémité centrale du bras inférieur (1B) et reliés à la tête de fixation (3) par une pièce d'ancrage commune (17).

8. Essuie-glace conforme à la revendication 7, caractérisé en ce que les deux ressorts hélicoïdaux (21, 22) sont montés côté à côté et sensiblement parallèles.

9. Essuie-glace conforme à la revendication 7, caractérisé en ce que chaque ressort comporte une partie hélicoïdale (14C, 15C) prolongée par une branche rectiligne de liaison (14D, 15D), les deux ressorts étant montés tête-bêche dans le profil en U de l'extrémité centrale (1B) du bras inférieur et la partie hélicoïdale (15C) de l'un des ressorts (15) se trouvant disposée du côté de la tête de fixation (3) et traversée intérieurement par la branche rectiligne de liaison (14D) de l'autre ressort (14).

**Patentansprüche**

1. Doppel-Scheibenwischer, insbesondere für Windschutzscheiben in Fahrzeugen, mit zwei etwa parallelen und eng aneinanderliegenden Armen (1, 2), wobei jeder etwa geradlinige Arm ein freies äußeres Ende (1A, 2A) aufweist, das einen Wischer trägt, der etwa parallel zum Wischer des anderen Armes verläuft und der in Betriebsstellung auf der Windschutzscheibe anliegt, wobei das andere, mittige Ende (1B, 2B) jedes Armes an einen Befestigungskopf (3) angelenkt ist, der in Betriebsstellung auf einer beiden Armen gemeinsamen Rotationsachse (X1—X2) angeordnet ist, die etwa senkrecht zu einem mittigen Bereich der Windschutzscheibe verläuft und in einer wechselnden Drehung in einem Bereich, der einem vorbestimmten zu wischenden Bereich auf der Oberfläche der Windschutzscheibe entspricht, bewegt werden kann, während der Befestigungkopf (3) am mittigen Ende jedes Armes eine Schwenkachse (X3—X4) aufweist, die etwa senkrecht zu seiner wechselnden Drehachse verläuft, und mit federnden Haltevorrichtungen (14, 15), um jeden Wischer einzeln gegen die Oberfläche der Windschutzscheibe zu drücken, dadurch gekennzeichnet, daß die Schwenkachse (X3—X4) die einzige und den beiden mittigen Enden gemeinsam ist und daß das mittige Ende jedes Armes und der Befestigungskopf (3) seitliche Halteflächen (6) aufweisen, die quer zur Schwenkachse (X3—X4) verlaufen und dazu vorgesehen sind, jeweils derart miteinander zusammenwirken, daß jeder Arm leicht um die gemeinsame Schwenkachse (X3—X4) schwenkbar ist, wobei sie in einer gleichen, zur Achse quer verlaufenden Ebene verbleiben, um es dem mit jedem Arm verbundenen Wischer zu ermöglichen, genau dem mehr oder weniger gewölbten Profil der Windschutzscheibe über den gesamten Wischbereich derselben zu folgen.

2. Scheibenwischer nach Anspruch 1, dadurch gekennzeichnet, daß das mittige Ende (1B) eines der Arme, nämlich des unteren, ein etwa U-förmiges Profil aufweist, das auf ein etwa parallelflaches Teil (7) des Befestigungskopfes (3) aufgebracht ist, daß das mittige Ende (2B) des anderen oberen Armes ein entsprechendes U-förmiges Profil aufweist, jedoch mit einem geringfügig größeren Ausmaß als das des mittigen Endes des unteren Armes, damit es auf dieses Ende aufbringbar ist, wobei die gegenüberliegenden seitlichen Halteflächen Schenkel (6) der beiden mittigen Enden mit U-förmigem Profil bilden und so auf jeder Seite des Befestigungskopfes (3) übereinander angeordnet sind, und daß das parallelfläche Teil derart mit Durchbrüchen versehen ist, daß die Schenkel der mittigen Enden mit U-förmigem Profil durch die Schwenkachse (X3—X4, 5) beiden mittigen Enden (1B, 2B) gemeinsam sind.

3. Scheibenwischer nach einem der Ansprüche 1 oder 2, dadurch gekennzeichnet, daß die beiden nebeneinander liegenden seitlichen Halteflächen (6) der beiden mittigen Enden (1B, 2B) und/oder des Befestigungskopfes (3) Gleitmittel (8) aufweisen, um das freie und unabhängige Verschwenken des mittigen Endes jedes Armes im Verhältnis zum anderen Arm zu erleichtern.

4. Scheibenwischer nach Anspruch 3, dadurch gekennzeichnet, daß die Gleitmittel durch zumindest eine vorspringende Nocke (8) gebildet sind.

5. Scheibenwischer nach einem der Ansprüche 1 bis 4, dadurch gekennzeichnet, daß die mittigen Enden (1B, 2B) der beiden Arme derart mit einer ausreichenden Winkelschwingungsmöglichkeit einer gegen den anderen und/oder gegen den Befestigungskopf (3), um ihre gemeinsame Schwenkachse (X3—X4) angebracht sind, daß die mittigen Enden (1B, 2B) der Arme in keinem Fall in Reichweite zueinander kommen können.

6. Scheibenwischer nach einem der Ansprüche 1 bis 5, dadurch gekennzeichnet, daß die elastischen Haltevorrichtungen für jeden Arm eine auf Zug beanspruchte Schraubenfeder (14, 15, 21, 22) aufweisen, wobei jede Feder ein Ende (14A, 15A) besitzt, das mit dem entsprechenden Arm an einer Stelle, die in Richtung des freien Endes (1A, 2A) des Armes angeordnet ist, verbunden ist, und das andere Ende (14B, 15B) mit dem Befestigungskopf (3) an einer Stelle (16) verbunden ist, die nahe der Schwenkachse (X3—X4) der beiden mittigen Enden liegt und zwischen dieser Achse und der Oberfläche der Windschutzscheibe angeordnet ist.

7. Scheibenwischer nach Anspruch 6, dadurch gekennzeichnet, daß die beiden Schraubenfeder (14, 15, 21, 22) in dem inneren Teil des U-förmigen Profils des mittigen Endes des unteren Armes (1B) angeordnet und mit dem Befestigungskopf (3) durch ein gemeinsames Verankerungsstück (17) befestigt sind.

8. Scheibenwischer nach Anspruch 7, dadurch gekennzeichnet, daß die beiden Schraubenfedern (21, 22) nebeneinander angeordnet sind und etwa parallel verlaufen.

9. Scheibenwischer nach Anspruch 7, dadurch gekennzeichnet, daß jede Feder einen schraubenförmigen Teil (14C, 15C) das durch ein geradliniges Verbindungsstück (14D, 15D) verlängert ist, aufweist, daß die beiden Federn im U-förmigen Profil des mittigen Endes (1B) des unteren Armes entgegengesetzt befestigt sind und der schraubenförmige Teil (15C) einer der Federn (15) in Nähe des Befestigungskopfes (3) angeordnet und innenliegend durch den geradlinigen Verbindungsteil (14D) der anderen Feder (14) weitergeführt ist.

## Claims

1. Double windscreen wiper, in particular for a vehicle windscreen comprising two arms (1, 2) which are substantially parallel and close to one another, in which each substantially rectilinear arm has a free end (1A, 2A) which supports a blade substantially parallel to the blade of the other arm and applied in the operating position against the windscreen, the other end, called the central end (1B, 2B), of each arm being articulated on a fastening head (3) mounted in the operating position on an axis of rotation (X1, X2) common to the two arms, substantially perpendicular to a central zone of the windscreen and being able to be provided with an alternating rotary movement in a sector correspondingh to a predetermined sector to be cleaned on the surface of the windscreen, whereas the fastening head (3) comprises at the central end of each arm an axis of articulation (X3—X4) substantially perpendicular to its axis of alternating rotation, and resilient support means (14, 15) for the individual application of each blade against the windscreen surface, characterised in that the axis of articulation (X3—X4) is a single axis common to the two central ends and in that the central end of each arm and the fastening head (3) have lateral support faces (6), transverse to the axis of articulation (X3—X4), provided to engage respectively together so as to enable each arm to pivot slightly about the common axis of articulation (X3—X4) whilst remaining in a same plane transverse to the said axis, so as to enable the blade associated with each arm to follow the more or less arcuate profile of the windscreen in an exact manner, at all points of the sector to be cleaned thereon.

2. A windscreen wiper as claimed in claim 1, characterised in that the central end of one of the arms, called the lower end (1B), has a profiled, substantially U-shaped shape, fitted on a substantially parallelepipedic portion (7) of the fastening head (3), the central end of the other arm, called the upper arm (2B) having a similar U shape but with a size which is slightly greater than that of the central end of the lower arm so that it can be fitted on this end, the opposite lateral faces forming the flanges (6) of the two central U-shaped ends being thus superposed on each side of the fastening head (3) and in that the said parallelepipedic portion, as well as the flanges of the U-shaped central ends, is traversed by the axis of articulation (X3—X4, 5) common to the two central ends (1B, 2B).

3. A windscreen wiper as claimed in one of claims 1 or 2, characterised in that the lateral support faces (6), associated in twos, of the two central ends (1B, 2B) and/or of the fastening head (3) comprise slide means (8) designed to facilitate the free and independent pivoting of the central end of each arm with respect to the other arm.

4. A windscreen wiper as claimed in claim 3, characterised in that the slide means are formed by at least one porjecting boss (8).

5. A windscreen wiper as claimed in one of claims 1 to 4, characterised in that the central ends (1B, 2B) of the two arms are mounted with the possibility of sufficient angular clearance about their common axis of articulation (X3—X4) with respect to one another and/or with respect to the fastening head (3) such that the central ends (1B, 2B) of the arms can in no case come to bear against one another.

6. A windscreen wiper as claimed in one of claims 1 to 5, characterised in that the resilient support means comprise, for each arm, a helical spring (14, 15, 21, 22) operating by tension, each spring having one end (14A, 15A) connected to the corresponding arm at a point located on the side of the free end (1A, 2A) of this arm, and the other end (14B, 15B) connected to the fastening head (3) at a point (16) of the latter close to the axis of articulation (X3—X4) of the two central ends and located between this axis and the windscreen surface.

7. A windscreen wiper as claimed in claim 6, characterised in that the two helical springs (14, 15, 21, 22) are housed in the inner portion of the U-shaped profile of the central end of the lower arm (1B) and connected to the fastening head (3) by a common anchoring component (17).

8. A windscreen wiper as claimed in claim 7, characterised in that the two helical springs (21, 22) are mounted side by side and substantially parallel.

9. A windscreen wiper as claimed in claim 7, characterised in that each spring comprises a helical portion (14C, 15C) extended by a rectilinear connection arm (14D, 15D), the two springs being mounted upside down with respect to one another in the U-shaped profile of the central end (1B) of the lower arm and the helical portion (15C) of one of the springs (15) being disposed on the side of the fastening head (3) and traversed internally by the rectilinear connection arm (14D) of the other spring (14).

*Fig:1*

*Fig:2*

*Fig:3*

0 060 781

Fig.4

Fig.5

Fig.6

Fig.7